# EUROPÄISCHE PATENTSCHRIFT

(11) **EP 1 160 042 B1**
(45) Veröffentlichungstag und Bekanntmachung des Hinweises auf die Patenterteilung: **26.10.2005**
(21) Anmeldenummer: 01113038.2
(22) Anmeldetag: 29.05.2001
(51) Int. Cl.: B23D 77/02

(54) **Reibahle**
Reamer
Alésoir

(30) Priorität: 02.06.2000 DE 10027592; 06.07.2000 DE 10033012
(43) Veröffentlichungstag der Anmeldung: 05.12.2001
(73) Patentinhaber: MAPAL Fabrik für Präzisionswerkzeuge Dr. Kress KG, D-73431 Aalen (DE)
(72) Erfinder:
(74) Vertreter: Gleiss, Alf-Olav

(56) Entgegenhaltungen:
- EP-A- 0 157 114
- US-A- 5 474 406
- US-A- 5 494 383

## Beschreibung

Die Erfindung betrifft eine Reibahle zum Feinbearbeiten von Bohrungsoberflächen von metallischen Werkstücken gemäß Oberbegriff des Anspruchs 1.

Reibahlen der hier angesprochenen Art sind bekannt. Sie werden zur Feinbearbeitung von Bohrungsoberflächen verwendet, wobei Durchgangs- und Sacklöcher bearbeitet werden können. Die Reibahlen weisen wenigstens eine Haupt- und mindestens eine Nebenschneide auf. Häufig sind derartige bekannte Reibahlen mit mindestens einer Messerplatte versehen, die die genannten Haupt- und Nebenschneiden zeigt. Ein wichtiger Gesichtspunkt bei der Feinbearbeitung von Bohrungsoberflächen ist die Beeinflussung der entstehenden Späne. Diese müssen einerseits gebrochen und andererseits aus der zu bearbeitenden Bohrung so abtransportiert werden, dass sie nicht zwischen Werkzeug und Bohrungsoberfläche gelangen können. Bei der Bearbeitung von Durchgangs- und Sacklöchern werden unterschiedliche Reibahlen eingesetzt, um den Spanablauf entsprechend zu beeinflussen. Die Reibahlen werden mit unterschiedlich ausgerichteten Haupt- und Nebenschneiden ausgestattet. Diese werden so angeordnet, dass sie nicht parallel zu einer die Mittel- beziehungsweise Drehachse des Werkzeug schneidenden Ebene verlaufen, sondern mit dieser einen spitzen Winkel einschließen. Diese Ausgestaltung stellt einen Rechts- beziehungsweise Linksdrall der Späne sicher. Bei Reibahlen, die mit Messerplatten versehen sind, werden die Messerplatten so innerhalb des Werkzeugkörpers angeordnet, dass sie nicht parallel zu einer die Mittel- beziehungsweise Drehachse des Werkzeugs schneidenden Ebene liegen, sondern mit dieser einen spitzen Winkel einschließen, um einen Rechts- beziehungsweise Linksdrall der Späne sicherzustellen. Es zeigt sich also, dass die Herstellung der unterschiedlichen Werkzeuge für die Bearbeitung von Durchgangs- und Sacklöchern aufwendig und damit kostenintensiv ist.

Aufgabe der Erfindung ist es, eine Reibahle zu schaffen, die diesen Nachteil nicht aufweist.

Zur Lösung dieser Aufgabe wird eine Reibahle zur Feinbearbeitung von Bohrungsoberflächen von metallischen Werkstücken vorgeschlagen, die die in Anspruch 1 genannten Merkmale aufweist. Sie zeichnet sich dadurch aus, eine Spanleitstufe vorgesehen ist, die im Bereich der Hauptschneide ansteigt. Das heißt, die Spanleitstufe zeigt einen abnehmenden Abstand zur Hauptschneide. Die Spanleitstufe ist dabei so angeordnet, dass sie auch im Bereich der Hauptschneide unter einem abnehmenden Abstand zu einer gedachten Fortsetzung einer Außenkante der Reibahle verläuft. Dieses Werkzeug ist einfach und kostengünstig realisierbar.

Besonders bevorzugt wird ein Ausführungsbeispiel der Reibahle, das sich dadurch auszeichnet, dass mindestens eine Messerplatte vorgesehen ist, die die Haupt- und Nebenschneide umfasst. Es ist also möglich, eine Reibahle mit einer Messerplatte auszustatten, die eine Spanleitstufe zeigt, die im Bereich der Hauptschneide der Messerplatte ansteigt, damit also einen abnehmenden Abstand zur Hauptschneide beziehungsweise zu einer gedachten Fortsetzung der Außenkante der Messerplatte aufweist.

Bevorzugt wird ein Ausführungsbeispiel der Reibahle, das sich dadurch auszeichnet, dass die Spanleitstufe geradlinig verläuft beziehungsweise ausgebildet ist. Da die Spanleitstufe in der Regel mittels eines Schleifvorgangs hergestellt wird, ist eine derartige Ausgestaltung besonders preiswert realisierbar.

Ein weiteres Ausführungsbeispiel der Reibahle wird deshalb bevorzugt, weil die Messerplatte parallel zur Mittel- beziehungsweise Drehachse der Reibahle angeordnet ist. Es ist daher auch möglich, bestehende Reibahlen mit einer Messerplatte der hier angesprochenen Art auszustatten und die Bearbeitung von Sacklöchern problemlos durchzuführen, da die anfallenden Späne leicht abführbar sind, dies auch bei einer sogenannten Minimalmengenspülung, bei der relativ wenig Spül- und Kühlmittel während der Bearbeitung der Werkstückoberfläche eingesetzt wird.

Die Erfindung wird im folgenden anhand der Zeichnungen näher erläutert.

Es zeigen:
- Figur 1: eine perspektivische Prinzipskizze eines ersten Ausführungsbeispieles einer Reibahle;
- Figur 2: eine Draufsicht auf die Vorderseite beziehungsweise Messerbrust einer mit einer Reibahle gemäß Figur 1 verwendeten Messerplatte;
- Figur 3: eine perspektivische Ansicht des vorderen Schneidenbereichs der in Figur 2 wiedergegebenen Messerplatte und
- Figur 4: eine perspektivische Prinzipskizze eines zweiten Ausführungsbeispiels einer Reibahle.

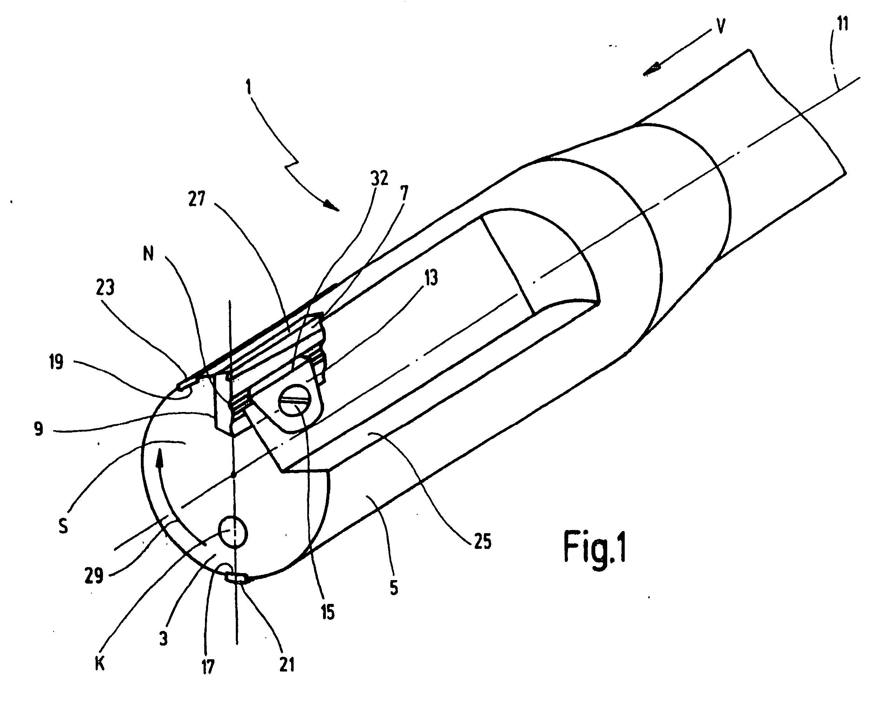

Die Prinzipskizze gemäß Figur 1 zeigt ein erstes Ausführungsbeispiel einer Reibahle 1 in perspektivischer Ansicht von schräg vorne. Reibahlen der hier angesprochenen Art sind grundsätzlich bekannt, so dass hier auf den Aufbau dieses Werkzeugs nur kurz eingegangen wird. Die Reibahle 1 weist einen Grundkörper 3 auf, in dessen Umfangsfläche 5 hier eine Messerplatte 7 eingesetzt ist und zwar in eine Nut 9, die in einer gedachten, die Mittel- beziehungsweise Drehachse 11 der Reibahle 1 schneidenden Ebene liegt oder parallel dazu angeordnet ist. Damit liegt auch die Messerplatte 7 in dieser gedachten Ebene oder parallel dazu. Die Messerplatte 7 ist auf übliche Weise mit Hilfe einer Sprannpratze 13 befestigt, die von einer Spannschraube 15 am Grundkörper 3 angebracht ist. Grundsätzlich ist die Messerplatte 7 mittels mindestens einer Stellschraube und eines zugehörigen Stellkeils radial verlagerbar, so dass diese bei Verschleiß nachstellbar, also radial nach außen verlagerbar ist.

In Nuten 17 und 19 sind hier zwei Führungsleisten 21 und 23 eingesetzt, die sich in Längsrichtung der Reibahle 1 erstrecken und deren Länge in der Regel so gewählt ist, dass diese länger ist als die in Richtung der Mittelachse 11 gemessene Länge der Messerplatte 7.

In den Grundkörper 3 ist eine in Längsrichtung verlaufende Ausnehmung 25 eingebracht, die als Spanraum bezeichnet wird und dem Abtransport der bei der Bearbeitung eines metallischen Werkstücks entstehenden Späne dient.

Zur Bearbeitung von Werkstücken bedarf es einer Relativbewegung zwischen der zu bearbeitenden Oberfläche einer Bohrung und der Schneide 27 der Messerplatte 7. Es ist also möglich, das Werkzeug stillstehen und das Werkstück rotieren zu lassen. In der Regel wird jedoch das Werkstück festgespannt und die rotierende Reibahle 1 in die zu bearbeitende Bohrung eingeführt. Dabei rotiert die Reibahle 1 hier in Richtung des Pfeils 29, so dass die Schneide 27 Späne von der zu bearbeitenden Bohrungsoberfläche abträgt, die dann in den Spanraum beziehungsweise in die Ausnehmung 25 gelangen. Bei entsprechender, quasi spiegelbildlicher Ausgestaltung der Reibahle ist natürlich auch eine Drehung der Reibahle in entgegengesetzter Richtung möglich.

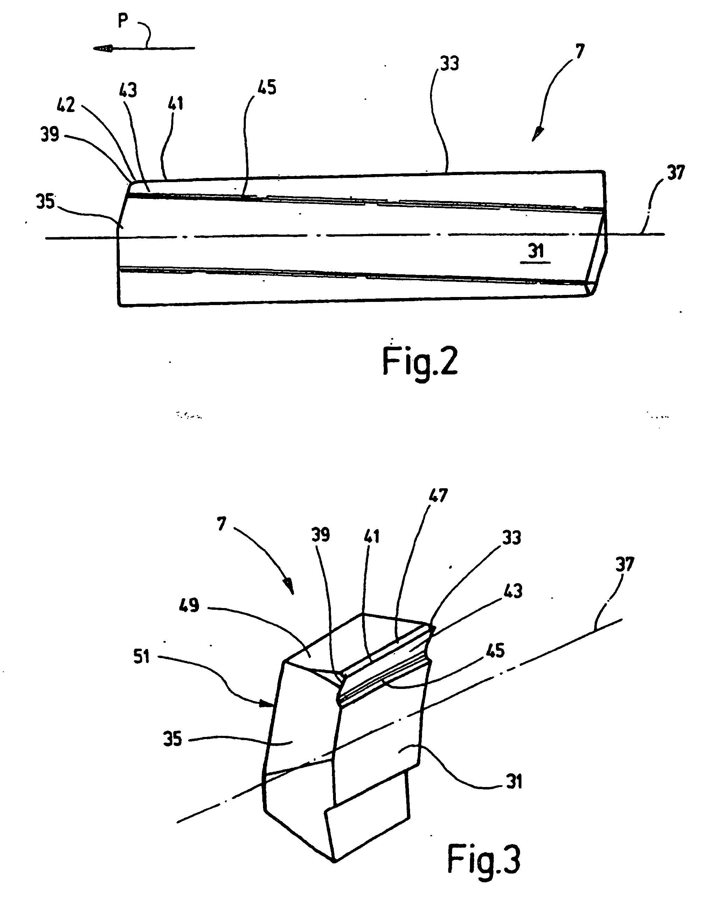

Die in die Reibahle 1 eingesetzte Messerplatte 7 ist in Figur 2 vergrößert dargestellt. Es ist hier die Vorderseite beziehungsweise Messerbrust 31 der Messerplatte 7 dargestellt, auf der die Spannpratze 13 beziehungsweise deren Spannlippe 32 aufliegt.

Die in Figur 1 angedeutete, in Längsrichtung der Messerplatte 7 verlaufende Nut N, in die die Spannlippe 32 eingreift, ist hier aus Gründen der Vereinfachung weggelassen.

Die hier dargestellte Messerplatte 7 ist im wesentlichen rechteckig ausgebildet. Es handelt sich hier beispielhaft um eine Wendeplatte, deren linke Oberkante und rechte gegenüberliegende Unterkante der Feinbearbeitung von Werkstücken dienen. Da die beiden Kanten identisch ausgebildet sind, wird im folgenden nur die linke Oberkante näher erläutert.

Die obere Längskante 33 der Messerplatte 7 fällt im Bereich der Vorderseite 35 der Messerplatte 7 nach links ab, das heißt ihr Abstand zu der gestrichelt eingezeichneten Mittellinie 37 der Messerplatte 7 nimmt ab. Dieser Bereich fällt auch in Vorschubrichtung ab. Das heißt, bei der Bearbeitung eines Werkstücks fällt dieser Bereich in der Richtung ab, in der die Reibahle 1 mit der Messerplatte 7 gegenüber dem Werkstück vorwärts bewegt wird. Dieser Bereich wird als Hauptschneide 39 bezeichnet. Die Vorschubrichtung ist in Figur 2 durch einen Pfeil P und in Figur 1 durch einen Pfeil V angedeutet.

Nach rechts schließt sich an die Hauptschneide 39 die sogenannte Nebenschneide 41 an, die entgegen der durch den Pfeil P gekennzeichneten Vorschubrichtung abfällt. Ihr Abstand zur Mittellinie 37 nimmt also von links nach rechts ab, so dass letztlich zwischen der nach links abfallenden Hauptschneide 39 und der nach rechts abfallenden Nebenschneide 41 ein Scheitelpunkt 42 gegeben ist. Diese Anordnung von Haupt- und Nebenschneide ist grundsätzlich bekannt, so dass hier nicht näher darauf eingegangen wird. Es sei nur noch festgehalten, dass hier die Hauptschneide 39 der Vorbearbeitung der zu bearbeitenden Bohrungsoberfläche dient und die Nebenschneide 41 der Fein- und Fertigbearbeitung.

An die obere Längskante 33 beziehungsweise an die Hauptschneide 39 und die Nebenschneide 41 schließt sich die auf der Vorderseite der Messerplatte 7 liegende Spanfläche 43 an, auf der die von den Schneiden abgetragenen Späne entlang verlaufen. In einem Abstand zu den Schneiden beziehungsweise der Längskante 33 ist eine Spanleitstufe 45 vorgesehen, gegen die die von den Schneiden 39 und 41 abgetragenen und auf der Spanfläche ablaufenden Späne anstoßen und gebrochen werden. Außerdem erhalten die Späne einen Bewegungsimpuls in einer Richtung, der durch die Neigung der Spanleitstufe 45 gegeben ist. Die Spanleitstufe 45 schließt einen spitzen Winkel mit der Mittellinie 37 ein, der sich oberhalb der Mittellinie 37 nach links öffnet. Die Spanleitstufe zeigt also einen von links nach rechts zunehmenden Abstand zur oberen Längskante 33 der Messerplatte 7. Der Winkel zwischen der Spanleitstufe 45 und der Längskante 33 liegt in einem Bereich von ca. 1° bis 5°, vorzugsweise von ca. 3°. Durch diese Neigung werden die sowohl von der Hauptschneide 39 als auch die von der Nebenschneide 41 abgetragenen Späne nach rechts abgelenkt und damit von der Vorderseite 35 der Messerplatte 7 in Figur 2 nach rechts, das heißt entgegen der Vorschubrichtung (Pfeil P) abtransportiert. Dies ist insbesondere bei der Bearbeitung von Sacklöchern sehr vorteilhaft, weil damit die Späne besonders leicht aus dem zu bearbeitenden Bereich abtransportiert werden können, ohne dass es zu einem Spanstau und einer Beschädigung der zu bearbeitenden Werkstückoberfläche dadurch kommt, dass Späne zwischen Werkzeug beziehungsweise Messerplatte und/oder Führungsleiste und Bohrungsoberfläche gelangen.

Die Beeinflussung des Spanablaufs auch im Bereich der Hauptschneide 39 ist also dergestalt, dass alle Späne nach rechts abtransportiert werden. Dies liegt daran, dass die Spanleitstufe 45 nicht nur im Bereich der Nebenschneide 41 sondern auch im Bereich der Hauptschneide 39 -in Richtung des Pfeils P, also in Vorschubrichtung- ansteigt, also einen abnehmenden Abstand zur Hauptschneide 39 aufweist. In anderen Worten: Der Abstand der Spanleitstufe 45 verringert sich hier durchgehend bis zur Vorderseite 35 der Messerplatte 7 auch gegenüber einer gedachten Fortsetzung der oberen Längskante 33. Umgekehrt nimmt der Abstand der Spanleitstufe 45 hier durchgehend, also auch insbesondere im Bereich der Hauptschneide 39 gegenüber der Mittellinie 37 von rechts nach links zu. Die Breite der Spanfläche zwischen Hauptschneide 39 und Spanleitstufe 45 beträgt -senkrecht zur Mittellinie 37 gemessen- ca. 0,4 mm bis höchstens 0,5 mm. Diese Werte gelten für Messerplatten 7, die etwa 20 mm lang und 10 mm breit sind.

Die perspektivische Ansicht der linken oberen Kante der Messerplatte 7 gemäß Figur 3 zeigt die Verhältnisse noch einmal im einzelnen:

Die Längskante 33 bildet im Bereich der Vorderseite 35 der Messerplatte 7 zunächst die Nebenschneide 41 und daran anschließend, ganz vorne, die Hauptschneide 39. Die obere Längskante 33 und die Schneiden 39 und 41 entsprechen der Schnittlinie der Spanfläche 43 und einem ersten Freiflächenbereich 47. An diesen schließt sich ein zweiter Freiflächenbereich 49 an. Die Freiflächenbereiche liegen im Bereich der Längsseiten der Messerplatte 7.

Der erste Freiflächenbereich 47 fällt von der oberen Längskante 33 unter einem spitzen Winkel in Figur 3 nach links in Richtung zur Mittelachse 37 beziehungsweise zu der Messerbrust 31 gegenüberliegenden Rückseite 51 der Messerplatte 7 ab. Der zweite Freiflächenbereich 49 fällt unter einem steileren Winkel ab. Die Freiflächenbereiche sind bekanntermaßen deshalb, wie hier beschrieben, geneigt, damit sich die Messerplatte 7 beziehungsweise Reibahle 1 nicht in der zu bearbeitenden Bohrung verklemmt. Dabei dient der sehr schmale erste Freiflächenbereich 47 noch der Abstützung der Reibahle 1 in der zu bearbeitenden Bohrung.

Auch aus Figur 3 ist ersichtlich, dass die Spanleitstufe 45 geradlinig ausgebildet ist und auch geradlinig über den gesamten Bereich der Nebenschneide 41 und der sich daran anschließenden Hauptschneide 39 durchgeht. Es ist grundsätzlich auch möglich, dass die Spanleitstufe 45 im allervordersten Bereich, also unmittelbar vor der Vorderseite 35 in Richtung zur Mittellinie 37 abknickt. Der Abknickpunkt liegt aber dabei näher an der Vorderseite 35 der Messerplatte 7 als der Scheitelpunkt 42 zwischen der Hauptschneide 39 und der Nebenschneide 41, um sicherzugehen, dass alle von der Hauptschneide 39 abgetragenen Späne auf den nach rechts abfallenden Bereich der Spanleitstufe 45 treffen und damit nach rechts weggefördert werden. Mit "rechts" wird hier die Richtung bezeichnet, die entgegen der Vorschubrichtung verläuft, die durch den Pfeil P in Figur 2 angedeutet ist.

Nach allem zeigt sich deutlich, dass die Reibahle 1 optimal zur Bearbeitung von Sacklöchern eingesetzt werden kann, wobei die von der zu bearbeitenden Werkstückoberfläche abgetragenen Späne sicher entgegen der Vorschubrichtung aus einem Sackloch abtransportiert werden, auch wenn während der Werkstückbearbeitung nur eine Minimalmengenspülung vorgesehen ist, bei der gegenüber einer herkömmlichen Kühlung beziehungsweise Spülung sehr viel weniger Kühl- beziehungsweise Schmiermittel eingesetzt wird, das zum Beispiel aus einem Kanal K austritt, der in der Stirnseite S der Reibahle 1 mündet.

Die Reibahle 1 kann dabei selbstverständlich auch zur Bearbeitung von Durchgangslöchern verwendet werden, indem die hier beschriebene Messerplatte 7 durch eine abgewandelte Form der Messerplatte ersetzt wird, bei der die Spanleitstufe 45 zumindest im Bereich der Hauptschneide 39 nach vorne, also in Richtung des Pfeils P abfällt und somit von der Hauptschneide 39 abgetragene Späne nach links, also in Vorschubrichtung beziehungsweise in Richtung des Pfeils P ablenkt.

Die hier beschriebene Reibahle 1 kann also, da die Messerplatte 7 quasi parallel zur Mittel- beziehungsweise Drehachse 11 der Reibahle 1 verläuft, sowohl zur Bearbeitung von Sacklöchern als auch von Durchgangslöchern eingesetzt werden, wobei zur Bearbeitung von Sacklöchern die hier beschriebene Messerplatte 7 vorteilhafterweise eingesetzt werden kann: Die entstehenden Späne werden durch die in Vorschubrichtung ansteigende Spanleitstufe 47 sicher entgegen der Vorschubrichtung abtransportiert. Zusätzliche Maßnahmen, insbesondere besonders starke Spülmittelströmungen, die entgegen der Vorschubrichtung verlaufen, sind bei dem hier beschriebenen Werkzeug nicht mehr erforderlich.

Bei der Bearbeitung von Durchgangslöchern kann die hier beschriebene Messerplatte mit einer entgegengesetzt ansteigenden Spanleitstufe 47 versehen werden, um die Späne nach vorne in Vorschubrichtung abzulenken und abzutransportieren.

Der Austausch der Messerplatten für die Bearbeitung von Sack- oder Durchgangslöchern ist deshalb besonders einfach, weil diese eben quasi parallel zur Drehachse der Reibahle verlaufen. Der Grundkörper der Reibahle ist also für die Bearbeitung der beiden Locharten identisch.

Es zeigt sich nach allem auch, dass die Messerplatte 7 besonders einfach und kostengünstig herstellbar ist, insbesondere dann, wenn die Spanleitstufe 45 über die gesamte Länge der Messerplatte geradlinig durchgehend ausgebildet ist, also in einem einfachen Schleifverfahren hergestellt werden kann.

Aus den Erläuterungen zu den Figuren wird deutlich, dass sich die Vorteile der besonders ausgestalteten Spanleitstufe nicht nur bei Wendeplatten einstellt, die durch eine Spannpratze gehalten werden, sondern auch bei fest eingelöteten Messerplatten, die die hier beschriebenen Merkmale aufweisen.

Das oben erläuterte erste Ausführungsbeispiel der Reibahle 1 weist eine Messerplatte 7 und zwei Führungsleisten 21 und 23 auf, wobei die erste der Messerplatte 7 -bezogen auf die Drehrichtung in Richtung des Pfeils 29- um ca. 40° nacheilt und die zweite um 180°. Es ist jedoch auch möglich, Reibahlen mit mehr als nur einer Messerplatte und mehr als nur zwei Führungsleisten auszustatten.

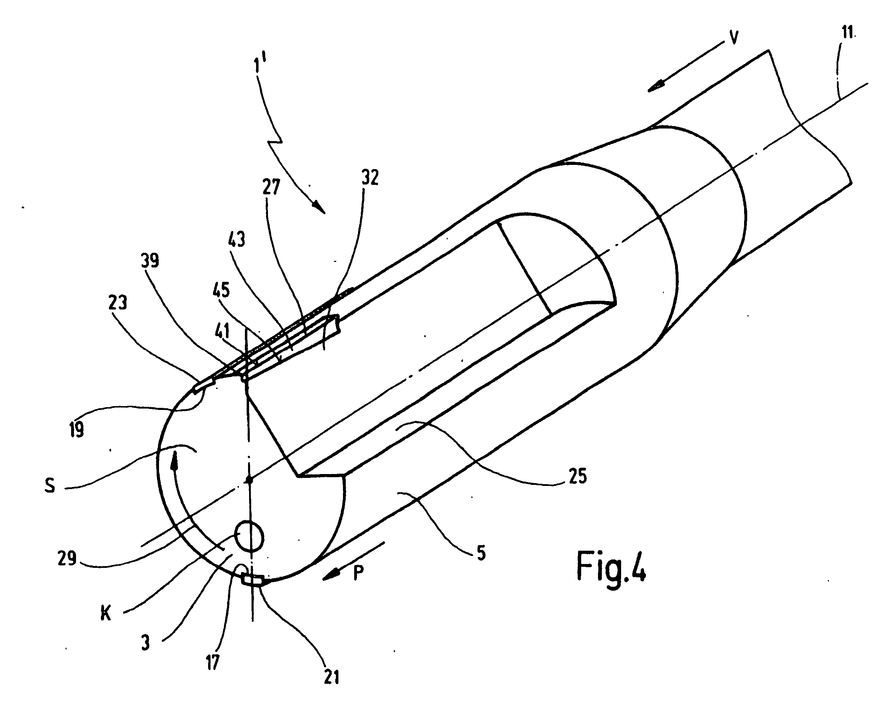

Figur 4 zeigt die Prinzipskizze eines zweiten Ausführungsbeispiels einer Reibahle 1'. Das in Figur 4 dargestellte Werkzeug entspricht im wesentlichen dem in Figur 1 wiedergegebenen. Gleiche Teile sind daher mit gleichen Bezugsziffern versehen. Im wesentlichen wird hier auf die Unterschiede zwischen den beiden Ausführungsbeispielen eingegangen:

Das in Figur 4 dargestellte Ausführungsbeispiel der Reibahle 1' zeichnet sich dadurch aus, dass eine Messerplatte, wie sie anhand der vorangegangenen Figuren erläutert wurde, entfällt. Bei der Reibahle 1' ist eine die Umfangsfläche 5 des Grundkörpers 3 überragende Schneide 27 vorgesehen, die sich über eine gewisse Länge des Grundkörpers, gemessen in Richtung seiner Drehachse 11, erstreckt. Die Schneide 27 ist hier aus dem Vollen gearbeitet. Es ist also hier nicht vorgesehen, eine Messerplatte, wie sie oben beschrieben wurde, in den Grundkörper 3 der Reibahle 1' einzusetzen.

Das in Figur 4 dargestellte zweite Ausführungsbeispiel weist eine einzige Schneide 27 auf. Es ist jedoch möglich, mehrere in Umfangsrichtung beabstandete die Umfangsfläche 5 überragende Schneiden vorzusehen. In den Grundkörper 3 sind auch hier zwei Führungsleisten 21 und 23 eingesetzt und zwar in dafür vorgesehene Nuten 17 und 19, es können auch mehr als zwei Führungsleisten vorhanden sein.

Die Schneide 27 weist, wie anhand der Figuren 2 und 3 erläutert, mindestens eine Hauptschneide 39 und eine Nebenschneide 41 auf, die allerdings bei der Prinzipdarstellung gemäß Figur 4 nicht deutlich ersichtlich sind. Ohne weiteres erkennbar ist jedoch eine Spanfläche 43, die unmittelbar an die Schneide 27 angrenzt und durch eine Spanleitstufe 45 begrenzt wird.

Die Spanleitstufe 45 steigt in Figur 4 von rechts nach links in Vorschubrichtung V an, sie weist also einen abnehmenden Abstand zur Schneide 27, insbesondere zur Hauptschneide 39 auf, die im vorderen Endbereich der Scheide angeordnet ist, also in dem Bereich der Schneide 27, der der Stirnseite S der Reibahle 1' zugewandt ist.

An die Schneide 27 schließen sich ein -in Figur 4 nicht dargestellter- erster Freiflächenbereich 47 und ein zweiter Freiflächenbereich 49 an, wie dies anhand von Figur 3 näher erläutert wurde. Insofern wird also auf die Beschreibung zu Figur 3 verwiesen. Im übrigen wird auf die Beschreibung zu Figur 2 verwiesen, was den Verlauf der Spanleitstufe 45 angeht.

Insgesamt ist hier festzuhalten, dass bei dem zweiten Ausführungsbeispiel der Reibahle 1' gemäß Figur 4 die Schneide 27, die Spanfläche 43 und die Spanleitstufe 45 identisch ausgebildet sind, wie dies anhand der Figuren 1 bis 3 am Beispiel einer Messerplatte 7 im einzelnen erläutert wurde. Der einzige Unterschied der Reibahle 1' gemäß Figur 4 zur Reibahle 1, wie sie anhand von Figur 1 erläutert wurde, besteht also, wie gesagt, darin, dass die Schneide 27 nicht Teil einer Messerplatte ist, sondern unmittelbar aus dem Grundkörper 3 der Reibahle 1' herausgearbeitet wurde. Entsprechend wurden auch die übrigen Konturen, die Spanfläche 43 und die Spanleitfläche 45 aus dem Grundkörper 3 der Reibahle 1' herausgearbeitet.

Das anhand von Figur 4 erläuterte Ausführungsbeispiel der Reibahle 1' zeichnet sich dadurch aus, dass bei der Bearbeitung von Sacklöchern die entstehenden Späne sicher entgegen der Vorschubrichtung der Reibahle 1' abtransportiert werden. Es ist also nicht erforderlich, zusätzliche Maßnahmen zu ergreifen, beispielsweise eine besonders starke, entgegen der Vorschubrichtung gerichtete Spülmittelströmung sicherzustellen. Durch die spezielle Anordnung der Spanleitstufe 45 ist selbst bei einer Minimalmengenspülung gewährleistet, dass bei der Bearbeitung eines Sacklochs die von der zu bearbeitenden Werkstückoberfläche abgetragenen Späne sicher entgegen der Vorschubrichtung abtransportiert werden, so dass Beeinträchtigungen der bearbeiteten Werkstückoberfläche vermieden werden.

Die anhand von Figur 4 erläuterte Reibahle 1' kann auch zur Bearbeitung von Durchgangslöchern verwendet werden, wenn die Spanleitstufe 45 zumindest im Bereich der Hauptschneide 39 nach vorne, also in Richtung des Pfeils P abfällt. Es gelten also auch hier die Erläuterungen zur Reibahle 1, die anhand der Figuren 1 bis 3 näher beschrieben wurde. Bei dem anhand von Figur 4 erläuterten Ausführungsbeispiel der Reibahle 1' wird durch die spezielle Anordnung der Spanleitstufe 45 sichergestellt, dass auch im Bereich der Hauptschneide 39 anfallende Späne ausnahmslos nach rechts, also entgegen der Richtung des Pfeils P abtransportiert werden. Dies wird dadurch erreicht, dass die Spanleitstufe 45 nicht nur im Bereich der Nebenschneide 41, sondern eben auch im Bereich der Hauptschneide 39 -in Vorschubrichtung V gesehen- ansteigt, also einen abnehmenden Abstand zur Hauptschneide aufweist. Hier gilt also auch, dass der Abstand der Spanleitstufe 45 zur Schneide 27 sich durchgehend bis zur Stirnseite S der Reibahle 1' verringert. Entsprechend nimmt der Abstand der Spanleitstufe 45 hier durchgehend, also auch insbesondere im Bereich der Hauptschneide 39 von links nach rechts gegenüber der Mittelachse 11 zu. Die Breite der Spanfläche 43 zwischen Hauptschneide 39 und Spanleitstufe 45 beträgt -senkrecht zur Schneide 27 gemessen- ca. 0,4 mm bis höchstens 0,5 mm. Diese Werte gelten für Schneiden 27, die etwa 20 mm lang sind.

Besonders hervorgehoben sei also noch einmal, dass Anordnung und Ausgestaltung der Spanleitstufe 45 gegenüber der Schneide 27 beziehungsweise gegenüber der Hauptschneide 39 und Nebenschneide 41 bei dem Ausführungsbeispiel gemäß Figur 4 identisch ist wie bei dem Ausführungsbeispiel gemäß Figur 1, das mit einer Messerplatte 7 ausgestattet ist. Es ist insbesondere auch möglich, eine Reibahle für die Bearbeitung von Durchgangslöchern zu realisieren: Die Spanleitstufe braucht nur eine entgegengesetzte Neigung aufzuweisen und in Vorschubrichtung abzufallen. Damit werden auch die Späne in Richtung des Pfeils P abgelenkt. In beiden Fällen liegen die Schneiden im Wesentlichen parallel zur Drehachse der Reibahle. Im übrigen sei noch hervorgehoben, dass die Reibahle 1' -in beiden Ausführungsvarianten- auch mehr als eine Schneide und mehr als zwei Ausführungsleisten aufweisen kann und dass sie auch quasi spiegelbildlich ausgestaltet sein kann, um eine entgegengesetzte Drehrichtung bei der Bearbeitung von Bohrungsoberflächen zu ermöglichen. Figur 4 zeigt nur beispielhaft eine Reibahle 1', die sich bei der Bearbeitung von Bohrungsoberflächen entsprechend dem Pfeil 29 -von vorne gesehen- im Uhrzeigersinn dreht.

Bei dem anhand von Figur 4 erläuterten zweiten Ausführungsbeispiel der Reibahle 1' ist vorgesehen, dass der Grundkörper 3 der Reibahle 1' aus Hartmetall besteht, wobei zumindest die Schneide 27 und die sich daran anschließenden Bereiche, beispielsweise die Spanfläche 43 und die Spanleitstufe 45, mit einer Hartmetallschicht versehen sein können. Eine derartige Beschichtung ist für Messerplatten bekannt, so dass hier nicht mehr darauf eingegangen zu werden braucht.

## Patentansprüche

1. Reibahle zur Feinbearbeitung von Bohrungsoberflächen von metallischen Werkstücken, mit mindestens einer Haupt- (39) und mit wenigstens einer Nebenschneide (41), mit einer an die Schneiden angrenzenden Spanleitstufe (45), die im Bereich der Nebenschneide (41) -in Richtung der Vorschubrichtung gesehen- ansteigt, das heißt, einen abnehmenden Abstand zur Nebenschneide (41) aufweist, **dadurch gekennzeichnet, dass** die Spanleitstufe (45) auch im Bereich der Hauptschneide (39) -in Richtung der Vorschubrichtung gesehen- ansteigt, das heißt, einen abnehmenden Abstand zur Hauptschneide (39) aufweist.

2. Reibahle nach Anspruch 1, **gekennzeichnet durch** mindestens eine Messerplatte (7), die die Haupt- und Nebenschneide (39, 41) umfasst.

3. Reibahle nach Anspruch 1 oder 2, **dadurch gekennzeichnet, dass** die Spanleitstufe (45) geradlinig ausgebildet ist.

4. Reibahle nach Anspruch 2 oder 3, **dadurch gekennzeichnet, dass** die Spanleitstufe (45) mit einer Mittellinie der Messerplatte (7) einen Winkel von ca. 1° bis 5°, vorzugsweise von ca. 3° einschließt.

5. Reibahle nach einem der vorhergehenden Ansprüche, **dadurch gekennzeichnet, dass** die Spanleitstufe (45) über den gesamten Verlauf der Hauptschneide (39) -vorzugsweise geradlinig- durchläuft.

6. Reibahle nach einem der vorhergehenden Ansprüche, **dadurch gekennzeichnet, dass** die Spanleitstufe (45) über den gesamten Verlauf der Nebenschneide (41) -vorzugsweise geradlinig- durchläuft.

7. Reibahle nach einem der vorhergehenden Ansprüche, **dadurch gekennzeichnet, dass** die Spanleitstufe (45) unmittelbar vor der Vorderseite (35) der Messerplatte (7) abknickt.

8. Reibahle nach Anspruch 7, **dadurch gekennzeichnet, dass** der Abknickpunkt näher an der Vorderseite (35) der Messerplatte (7) liegt als der Scheitelpunkt (42) zwischen Hauptschneide (39) und Nebenschneide (41).

9. Reibahle nach einem der vorhergehenden Ansprüche, **dadurch gekennzeichnet, dass** die Messerplatte (7) als Wendeplatte ausgebildet ist.

10. Reibahle nach einem der vorhergehenden Ansprüche, **dadurch gekennzeichnet, dass** die Messerplatte (7) parallel zu einer die Mittel- beziehungsweise Drehachse (11) der Reibahle (1) schneidenden gedachten Ebene oder in dieser Ebene angeordnet ist.

## Claims

1. Reamer for fine machining bore surfaces of metallic workpieces, with at least one main blade (39) and with at least one auxiliary blade (41), comprising a chip-guiding step (45) adjacent to the blades, said chip-guiding step rising in feed direction in the zone of the auxiliary blade (41), that is to say presenting a decreasing distance from the auxiliary blade (41), **characterised in that** the chip-guiding step (45) also rises in feed direction in the zone of the main blade (39), that is to say presents a decreasing distance from the main blade (39).

2. Reamer according to claim 1, **characterised by** at least one cutter plate (7) comprising the main blade and the auxiliary blade (39, 41).

3. Reamer according to claim 1 or 2, **characterised in that** the chip-guiding step (45) is of linear configuration.

4. Reamer according to claim 2 or 3, **characterised in that** the chip-guiding step (45) encloses an angle of about 1° to 5°, preferably of about 3°, with a center line of the cutter plate (7).

5. Reamer according to any one of the preceding claims, **characterised in that** the chip-guiding step (45) extends over the entire length of the main blade (39), preferably in a linear manner.

6. Reamer according to any one of the preceding claims, **characterised in that** the chip-guiding step (45) extends over the entire length of the auxiliary blade (41), preferably in a linear manner.

7. Reamer according to any one of the preceding claims, **characterised in that** the chip-guiding step (45) bends downward immediately in front of the front side (35) of the cutting plate (7).

8. Reamer according to claim 7, **characterised in that** the bending point lies closer to the front side (35) of the cutter plate (7) than the apex (42) between the main blade (39) and the auxiliary blade (41).

9. Reamer according to any one of the preceding claims, **characterised in that** the cutter plate (7) is formed as a reversible plate.

10. Reamer according to any one of the preceding claims, **characterised in that** the cutter plate (7) is disposed parallel to or in an imaginary plane intersecting respectively the central axis and the axis of rotation (11) of the reamer (1).

## Revendications

1. Alésoir pour la finition de surfaces d'alésages de pièces à usiner métalliques, avec au moins une arête principale (39) et avec au moins une arête secondaire (41), comprenant un gradin de guidage de copeaux (45) adjacent aux arêtes, ledit gradin montant dans la zone de l'arête secondaire (41) vers la direction d'avance, c'est à dire présentant une distance diminuant par rapport à l'arête secondaire (41), **caractérisé en ce que** le gradin de guidage de copeaux (45) monte également dans la zone de l'arête principale (39) vers la direction d'avance, c'est à dire il présente une distance diminuant par rapport à l'arête principale (39).

2. Alésoir selon la revendication 1, **caractérisé par** au moins une plaquette de coupe (7) comprenant l'arête principale et l'arête secondaire (39, 41).

3. Alésoir selon la revendication 1 ou 2, **caractérisé en ce que** le gradin de guidage de copeaux (45) est de forme rectiligne.

4. Alésoir selon la revendication 2 ou 3, **caractérisé en ce que** le gradin de guidage de copeaux (45) forme un angle d'environ 1° à 5°, préférablement d'environ 3°, avec une ligne axiale de la plaquette de coupe (7).

5. Alésoir selon l'une des revendications précédentes, **caractérisé en ce que** le gradin de guidage de copeaux (45) s'étend sur toute la longueur de l'arête principale (39), préférablement de manière rectiligne.

6. Alésoir selon l'une des revendications précédentes, **caractérisé en ce que** le gradin de guidage de copeaux (45) s'étend sur toute la longueur de l'arête secondaire (41), préférablement de manière rectiligne.

7. Alésoir selon l'une des revendications précédentes, **caractérisé en ce que** le gradin de guidage de copeaux (45) se plie vers le bas immédiatement devant la face avant (35) de la plaquette de coupe (7).

8. Alésoir selon la revendication 7, **caractérisé en ce que** le point de pliage est plus proche de la face avant (35) de la plaquette de coupe (7) que le sommet (42) entre l'arête principale (39) et l'arête secondaire (41).

9. Alésoir selon l'une des revendications précédentes, **caractérisé en ce que** la plaquette de coupe (7) est réalisée comme plaquette réversible.

10. Alésoir selon l'une des revendications précédentes, **caractérisé en ce que** la plaquette de coupe (7) est disposée parallèlement à ou dans un plan imaginaire coupant la ligne axiale et l'axe de rotation (11), respectivement, de l'alésoir (1).
